# EUROPEAN PATENT APPLICATION

(11) **EP 1 886 898 A2**
(43) Date of publication of application: **13.02.2008**
(21) Application number: 07012508.3
(22) Date of filing: 26.06.2007
(51) Int. Cl.: B62D 5/04

(54) **Variable gear ratio steering device**

(30) Priority: 31.07.2006 JP 2006207522; 20.10.2006 JP 2006285674
(71) Applicant: Fujikiko Co., Ltd., Kosai-shi, Shizuoka 431-0431 (JP)
(72) Inventor: Inoue, Kyoichi, Kosai-shi Shizuoka 431-0431 (JP)
(74) Representative: Grünecker, Kinkeldey, Stockmair & Schwanhäusser Anwaltssozietät

(57) **Abstract**

A gear mechanism is arranged between input and output shafts and powered by an electric motor. The gear mechanism includes an assist shaft by which a rotation ratio between the input and output shafts is varied with the aid of an electric motor. A connecting unit has a first condition wherein the output shaft and the assist shaft are permitted to make a relative rotation therebetween thereby to cause the gear mechanism to operate normally and a second condition wherein the output shaft and the assist shaft are united together thereby to induce an integral rotation therebetween. The second condition induces a condition wherein the output shaft is rotated in the same direction as the input shaft and the rotation ratio between the input and output shafts is 1 : 1.

## Description

### BACKGROUND OF THE INVENTION

### 1. Field of the Invention

The present invention relates in general to steering devices of wheeled motor vehicles, and more particularly to variable gear ratio steering devices that can vary a steering gear ratio according to a vehicle speed or the like. More specifically, the present invention is concerned with the variable gear ratio steering devices of a type that can be easily applied to a rack-and-pinion type steering gear in place of an ordinary (viz., non-variable gear ratio type) steering device.

### 2. Description of the Related Art

Hitherto, various variable gear ratio steering devices have been proposed and put into practical use in the field of wheeled motor vehicles. In such variable gear ratio steering devices, a steering ratio between a steering angle defined by a steering wheel and a steered angle defined by steered road wheels is continuously varied in accordance with a vehicle speed or the like. One of such steering devices is disclosed in Japanese Laid-open Patent Application (Tokkaisho) 47-20835.

Some of the variable gear ratio steering devices hitherto proposed are of a type in which a direction of rotation of an input member of the device and a direction of rotation of an output member of the device are opposite to each other. Of course, the steering devices of this type can not be easily applied to a rack-and-pinion type steering gear because usually in such rack-and-pinion type steering gear, the pinion is arranged to rotate in the same direction as the steering wheel.

Furthermore, some of the variable gear ratio steering devices hitherto proposed are of a type that lacks a so-called failsafe means that assures the minimum required steering function of a steering system even if the steering device encounters a trouble. That is, the minimum required steering function is a basic steering function possessed by an ordinary (viz., non-variable gear ratio type) steering device. More specifically, the minimum required steering function is to rotate the output member at the same rotation speed as the input member.

### SUMMARY OF THE INVENTION

It is therefore an object of the present invention to provide a variable gear ratio steering device which is free of the above-mentioned drawbacks.

According to the present invention, there is provided a variable gear ratio steering device that allows the output member to rotate in the same direction as the input member and has a failsafe means by which the steering device can instantly take a failsafe mode for the minimum required steering function when the steering device encounters a trouble.

In accordance with the present invention, there is provided a variable gear ratio steering device which comprises an input shaft adapted to connect to a steering wheel; an output shaft adapted to connect to steered road wheels, the output shaft being coaxial with the input shaft and rotatable in the same direction as the input shaft; a gear mechanism arranged between the input and output shafts and powered by an electric motor, the gear mechanism including an assist shaft by which a rotation ratio between the input and output shafts is varied with the aid of the electric motor; and a connecting unit that has a first condition wherein the output shaft and the assist shaft are permitted to make a relative rotation therebetween thereby to cause the gear mechanism to operate normally and a second condition wherein the output shaft and the assist shaft are united together thereby to induce an integral rotation therebetween, the second condition inducing a condition wherein the output shaft is rotated in the same direction as the input shaft and the rotation ratio between the input and output shafts is 1 : 1.

### BRIEF DESCRIPTION OF THE DRAWINGS

Other objects and advantages of the present invention will become apparent from the following description when taken in conjunction with the accompanying drawings, in which:
Figs. 1A and 1B are schematic drawings of a variable gear ratio steering device of a first embodiment of the present invention, Fig. 1A showing a condition wherein an assist shaft and an output shaft are disconnected, and Fig. 1B showing a condition wherein the assist shaft and the output shaft are connected;
Fig. 2 is a front view of the variable gear ratio steering device of the first embodiment;
Fig. 3 is a right side view of the variable gear ratio steering device of the first embodiment;
Fig. 4 is a sectional view taken along the line IV-IV of Fig. 2;
Fig. 5 is a sectional view taken along the line V-V of Fig. 3;
Fig. 6 is a partially cut perspective view of the variable gear ratio steering device of the first embodiment;
Fig. 7 is an enlarged partially cut perspective view of a planetary gear unit employed in the variable gear ratio steering device of the first embodiment;
Fig. 8 is a perspective view showing a construction of an output shaft employed in the variable gear ratio steering device of the first embodiment;
Fig. 9 is a perspective view of the planetary gear unit and an eccentric gear unit which are employed in the variable gear ratio steering device of the first embodiment;
Fig. 10 is a partially cut perspective view of a connecting shaft unit employed in the variable gear ratio steering device of the first embodiment;
Fig. 11 is a perspective view showing a positional relation between the eccentric gear unit and a lock shaft which are employed in the variable gear ratio steering device of the first embodiment;
Fig. 12 is a view showing a construction of a connecting unit which is employed in the variable gear ratio steering device of the first embodiment;
Figs. 13A and 13B are schematic drawings of a variable gear ratio steering device of a second embodiment of the present invention, Fig. 13A showing a condition wherein an assist shaft and an output shaft are disconnected, and Fig. 13B showing a condition wherein the assist shaft and the output shaft are connected;
Fig. 14 is a partially cut perspective view of the variable gear ratio steering device of the second embodiment of the present invention;
Fig. 15 is a sectional view of an essential portion of the variable gear ratio steering device of the second embodiment;
Fig. 16 is another sectional view of the essential portion of the variable gear ratio steering device of the second embodiment;
Fig. 17 is an exploded view of the variable gear ratio steering device of the second embodiment;
Fig. 18 is an exploded view of a case employed in the variable gear ratio steering device of the second embodiment;
Fig. 19 is an exploded view of a shaft case and an electric connector installed therein, which are employed in the variable gear ratio steering device of the second embodiment, and
Fig. 20 is a view similar to Fig. 15, but showing a case wherein the steering device encounters a trouble.

### DETAILED DESCRIPTION OF THE EMBODIMENTS

In the following, first and second embodiments 1000 and 2000 of the present invention will be described in detail with reference to the accompanying drawings, which are variable gear ratio steering devices.

For ease of description, various directional terms, such as, upper, lower, right, left, upward and the like are used in the following description. However, such terms are to be understood with respect to only a drawing or drawings on which a corresponding part or portion is shown.

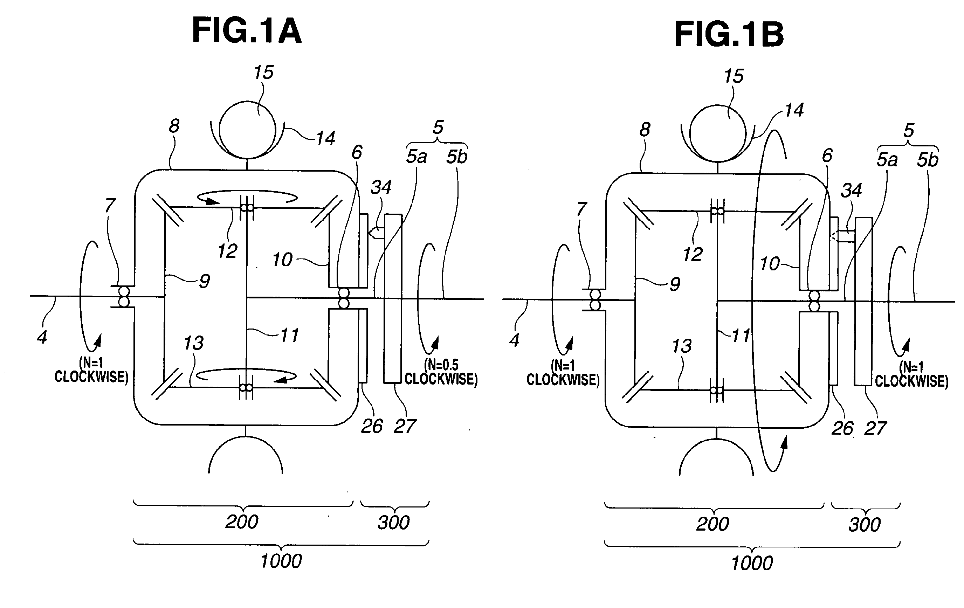

First, a variable gear ratio steering device 1000 that is a first embodiment of the present invention will be briefly described with reference to Figs. 1A and 1B that schematically show the principle of the invention.

As is seen from Figs 1A and 1B, the variable gear ratio steering device 1000 of the first embodiment generally comprises a planetary gear unit 200 as a gear mechanism and a connecting unit 300.

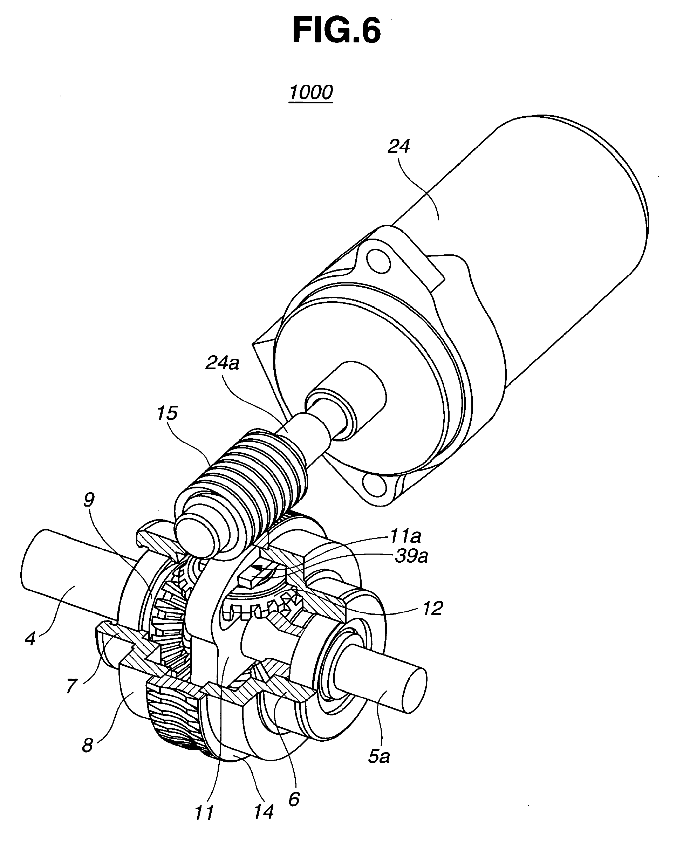

The planetary gear unit 200 comprises an input shaft 4 that is connected to a steering wheel (not shown) to be rotated about an axis thereof; an output shaft 5 that is rotatable in the same direction as the input shaft 4 and connected to steered road wheels (not shown) and hollow assist shafts 6 and 7 that are coaxial with the input and output shafts 4 and 5 and connected to an output shaft 24a of an electric motor 24 (see Fig. 6) for varying a ratio of rotation of the output shaft 5 relative to that of the input shaft 4, that is, a rotation ratio between the input and output shafts 4 and 5.

As shown, the input shaft 4 and output shaft 5 are arranged on a common axis, and a case 8 is arranged to be rotatable about the common axis. That is, the case 8 is rotatably supported by the input and output shafts 4 and 5 through the hollow assist shafts 6 and 7.

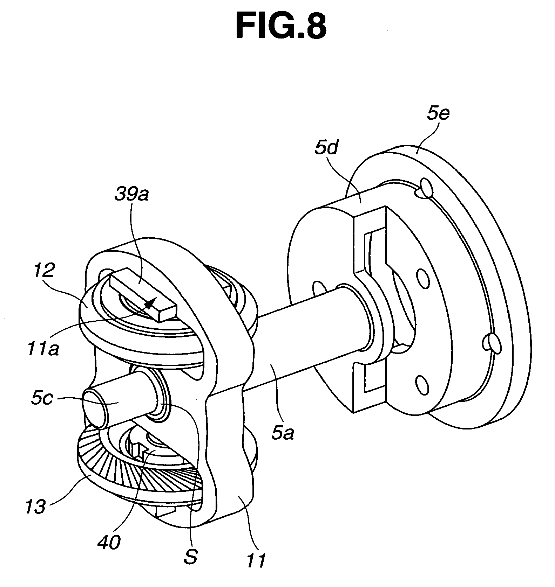

As shown, the input shaft 4 and the assist shaft 6 are provided with respective bevel gears 9 and 10. Meshed with the bevel gears 9 and 10 are bevel gears 12 and 13 that are rotatably connected to the output shaft 5 through a gear holder 11. The shape of the gear holder 11 will be well understood from Fig. 8.

An outer surface of the case 8 is provided with a worm wheel 14 that is meshed with a worm 15 fixed to an output shaft 24a (see Fig. 6) of the above-mentioned electric motor 24 (see Fig. 6).

When the electric motor 24 is deenergized, the input and output shafts 4 and 5 rotate in the same direction and a rotation ratio between the input and output shafts 4 and 5 is 1 : 0.5. That is, under such condition, the output shaft 5 turns one half for each turning of the input shaft 4.

The connecting unit 300 functions to couple the output shaft 5 and assist shaft 6 together to make an integral rotation therebetween. That is, once there occurs an abnormal operation in driving and control of the electric motor 24, the output shaft 5 becomes coupled with the assist shaft 6, so that the input and output shafts 4 and 5 are rotated in the same direction and the rotation ratio between the input and output shafts 4 and 5 becomes 1:1.

The connecting unit 300 comprises an electric lock device that is operatively disposed between the case 8 with the assist shafts 6 and 7 and the output shaft 5. In this electric lock device, when the case 8 and the output shaft 5 are coupled together, the case 8 and the gear holder 11 become united and thus, the bevel gears 12 and 13 take a fixed condition while meshing with the bevel gear 10. Thus, the four bevel gears 9, 10, 12 and 13 are united and thus rotate together like a single unit, so that the input and output shafts 4 and 5 rotate in the same direction and the rotation ratio between the input and output shafts 4 and 5 becomes 1:1.

It is to be noted that the meshing between the worm 15 and the worm wheel 14 is so made as to permit driving or rotation of the worm 15 from the worm wheel 14. For this permission, a suitable lead angle has to be defined between these worm 15 and worm wheel 14.

The above-mentioned abnormal operation includes a condition wherein a rotation angle or rotation number of the output shaft 5 relative to that of the input shaft 4 becomes out of a predetermined degree or range. In such abnormal condition, electric power supply to the electric motor 24 is blocked thereby to force the connecting unit 300 to cause a locked condition between the case 8 and the gear holder 11b.

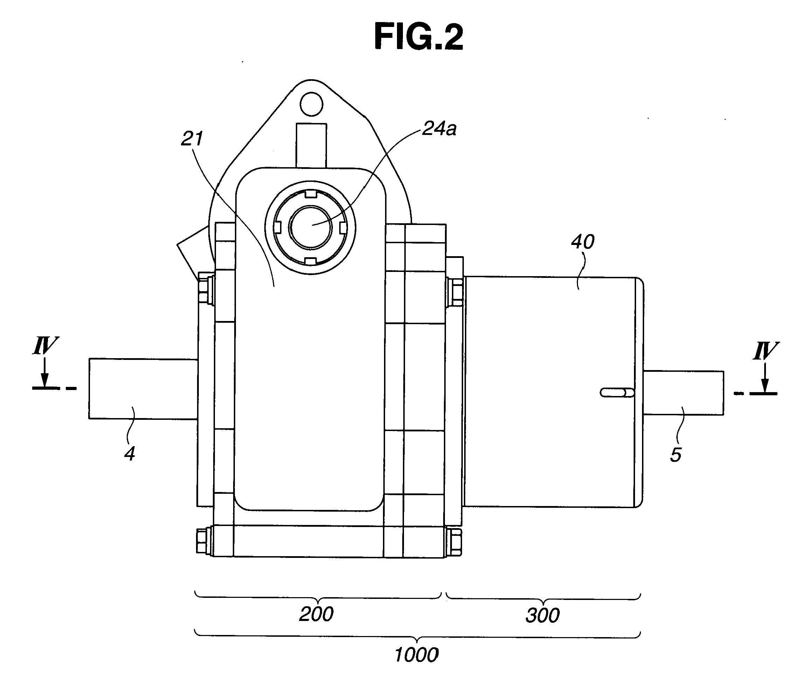

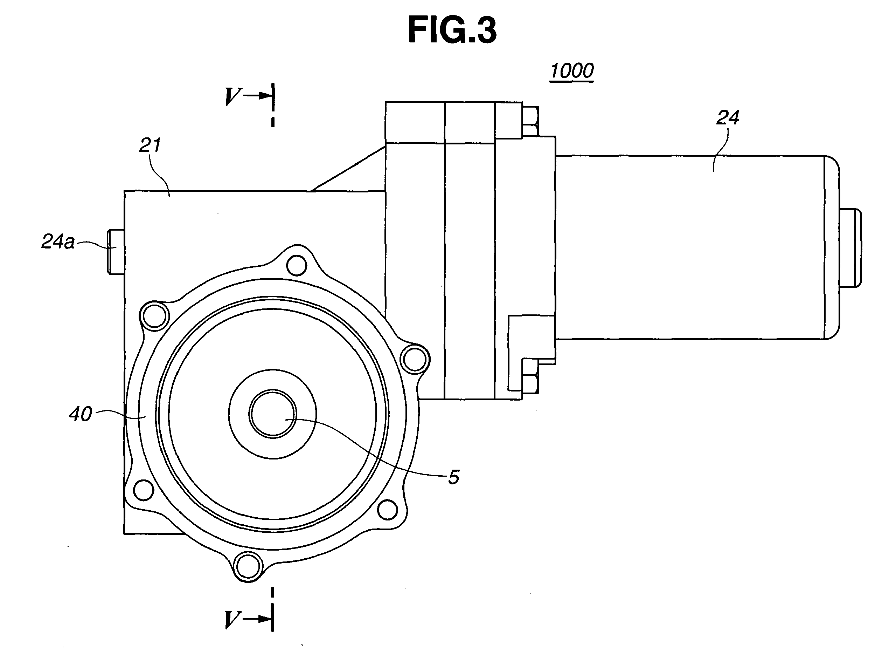

In the following, the detail of the variable gear ratio steering device 1000 of the first embodiment will be described with reference to Figs. 2, 3, 4 and 5.

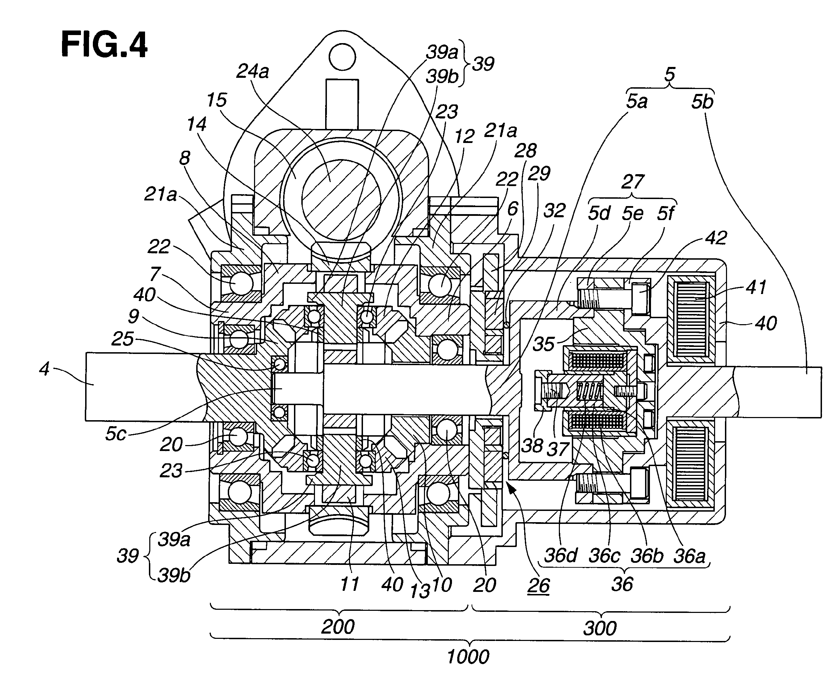

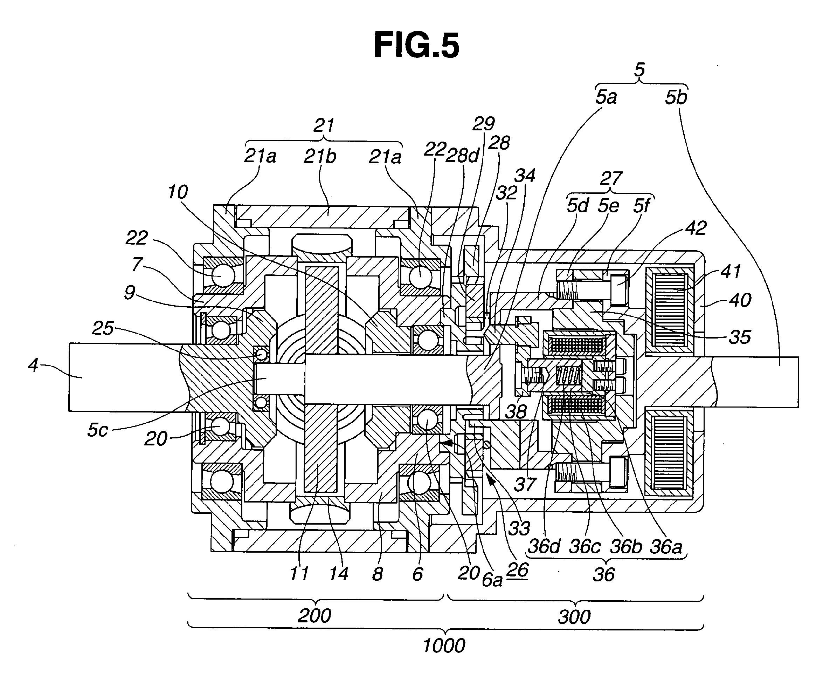

As is clearly seen from Figs. 4 and 5, in the planetary gear unit 200, the input shaft 4 connected to the steering wheel (not shown) and the output shaft 5 connected to the steered road wheels (not shown) are aligned and arranged to rotate in the same direction about the common axis thereof.

The output shaft 5 comprises a first output shaft part 5a and a second output shaft part 5b that are aligned. The hollow assist shafts 6 and 7 are rotatably and respectively arranged about the input shaft 4 and the first output shaft part 5a through respective bearings 20 and 20. As will be described hereinafter, due to usage of such two hollow assist shafts 6 and 7, the ratio of rotation of the output shaft 5 relative to that of the input shaft 4 can be varied. As shown, the two hollow assist shafts 6 and 7 are integrally provided with the case 8, and thus, the case 8 can rotate above the common axis relative to the input shaft 4 and the first output shaft part 5a.

To an inner end of the assist shaft 6, there is tightly fitted the bevel gear 10, and to an enlarged inner end of the input shaft 4, there is integrally formed the bevel gear 9. These bevel gears 10 and 9 are meshed with the bevel gears 12 and 13 respectively.

As is seen from Fig. 4, these bevel gears 12 and 13 are rotatably and respectively held via respective bearings 23 and 23 on upper and lower portions of the gear holder 11 that is connected to a left end portion of the first output shaft part 5a. The left end portion of the first output shaft part 5a is formed with a smaller diameter portion 5c that projects leftward. The smaller diameter portion 5c has a head rotatably received via a bearing 25 in a recess formed in a center portion of the bevel gear 9.

In the following, a positional relation between the first output shaft part 5a, the gear holder 11 and the bevel gears 12 and 13 will be described in detail with reference to Figs. 4, 5, 7, 8 and 9.

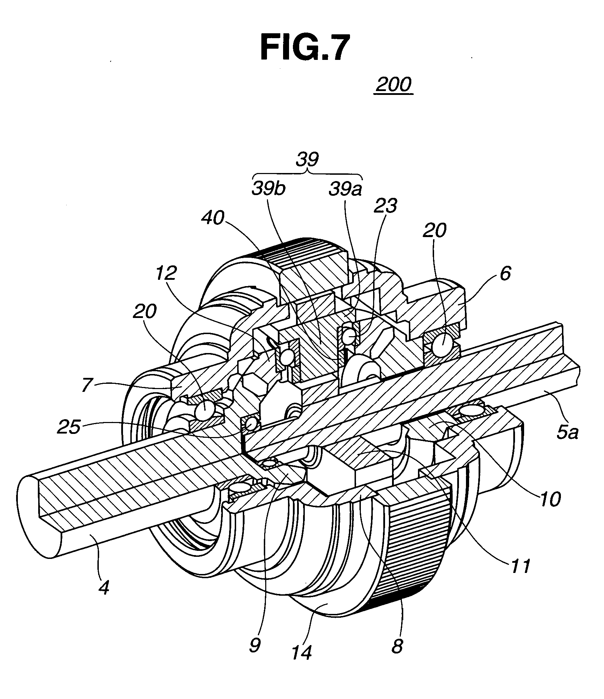

As is seen from Figs. 4 and 7, the planetary gear unit 200 has two fitting shafts 39 each including a cylindrical portion 39b and a square head portion 39a. As shown in Fig. 4, the bevel gears 12 and 13 are rotatably disposed on the respective fitting shafts 39 and 39 through respective bearings 23 and 23. For holding each bearing 23 in position, a nut 40 is used.

As is seen from Fig. 8, by placing the square head portion 39a in a cut 11a formed in the gear holder 11, each fitting shaft 39 is held by the gear holder 11 in such a manner as to rotate together with the gear holder 11 and move axially, that is, in an axial direction of the fitting shaft 39. As is seen from Fig. 4, two fitting shafts 39 and 39 are aligned.

As will be understood from Fig. 8, the gear holder 11 and the first output shaft part 5a are connected through a serration S.

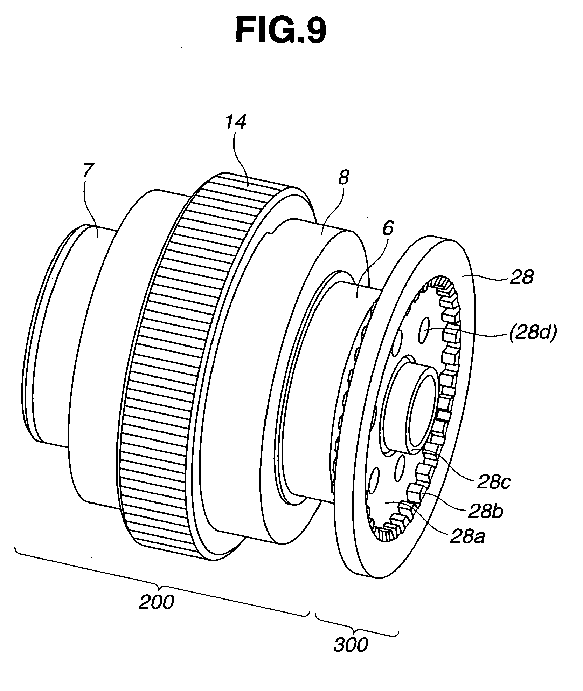

As will be understood from Fig. 9, the case 8 comprises two cylindrical parts that are united through the worm wheel 14. As shown by Fig. 7, a toothed portion of the worm wheel 14 is exposed to an outside of the case 8.

As is seen from Fig. 5, the case 8 is rotatably received in a first housing 21 through two axially spaced bearings 22 and 22. As shown, the first housing 21 comprises a pair of side housings 21a and 21a and a center housing 21b that is put between the side housings 21a and 21a.

As will be understood from Figs. 4 and 6, the center housing 21b of the first housing 21 has an opening through which a cylindrical toothed part of the worm 15 fixed to the output shaft 24a of the motor 24 is exposed to the interior of the first housing 21. As will be seen from such drawings, the motor 24 is arranged outside of the first housing 21. The worm 15 is meshed with the worm wheel 14. Figs. 6 and 7 are drawings in which the first housing 21 is removed.

In the following, the detail of the connecting unit 300 will be described, which functions to selectively couple the output shaft 5 and the assist shaft 6 together to make an integral rotation therebetween.

As is seen from Figs. 9, 10, 11 and 12, the connecting unit 300 comprises an internal gear 28, an external gear 29, a pair of wedges 31 and 31, a biasing spring 32 and a connecting shaft unit 27.

As is shown in Fig. 9, the internal gear 28 is produced by pressing or half blanking a circular metal plate. With this half blanking process, a circular recess 28a and internal teeth 28b are formed in the metal plate. The internal teeth 28b are formed on a cylindrical inner wall of the circular recess 29a as shown. Furthermore, an annular portion 28c is raised from a center portion of the circular recess 28a of the internal gear 28.

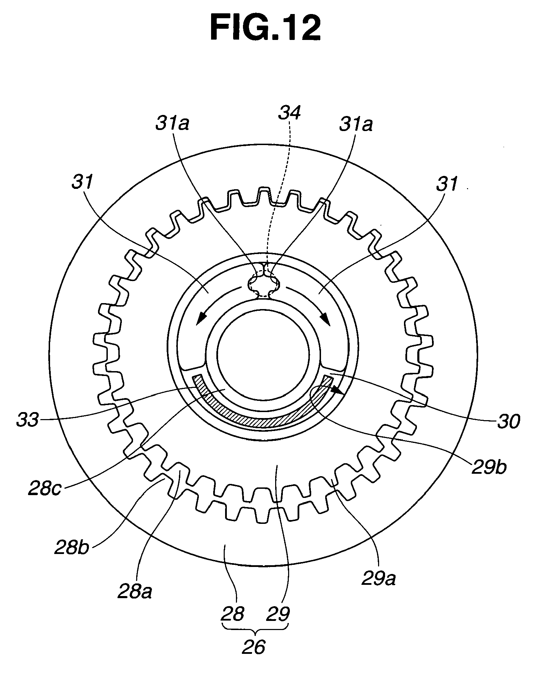

As is understood from Fig. 12, the external gear 29 has therearound a plurality of teeth 29a the number of which is less than that of the teeth 28b of the internal gear 28 by one or two. The external gear 29 has a center opening that is defined by a cylindrical inner wall 29b. As shown, the external gear 29 is loosely received in the circular recess 28a of the internal gear 28.

As is seen and understood from Figs. 5 and 9, the internal gear 28 is formed at its left end surface (in Fig. 9) with circularly arranged six projections 28d that are respectively put in recesses 6a formed in a right end surface (in Fig. 9) of the assist shaft 6. With this, the internal gear 28 is connected with the assist shaft 6 to rotate together like a single unit.

As is seen from Figs. 4, 5 and 10, the connecting shaft unit 27 is provided between the first and second output shaft parts 5a and 5b. That is, for producing the connecting shaft unit 27, a flange part 5e of a bottomed cylindrical portion 5d formed on a right end of the first output shaft part 5a and a flange part 5f formed on a left end of the second output shaft part 5b are connected by means of a plurality of bolts 42. That is, the first output shaft part 5a, the connecting shaft unit 27 and the second output shaft part 5b are integrally connected, so that the connecting shaft unit 27 is provided in a middle portion of the output shaft 5.

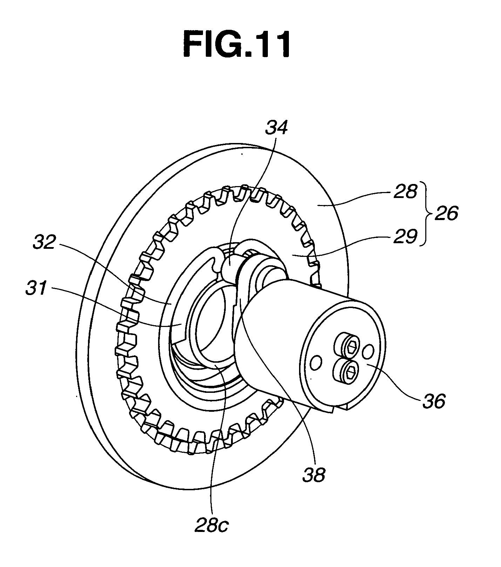

Referring back to Figs. 11 and 12 and Figs. 4 and 5, the internal gear 28 and the external gear 29 are operatively meshed with each other to constitute an eccentric gear unit 26.

As is seen from Fig. 12, between the annular raised portion 28c of the internal gear 28 and the cylindrical inner wall 29b of the external gear 29, there is defined an annular space 30 in which the paired wedges 31 and 31 are operatively received. That is, as is seen from the drawing, the two wedges 31 and 31 in the annular space 30 are arranged to face each other at their thicker ends.

As is seen from Fig. 11, for biasing the two wedges 31 and 31 in a direction to separate them, there is employed a circular spring 32 with curled ends. As is understood from Fig. 12, the curled ends of the circular spring 32 are hooked to guide grooves 31a and 31a formed in the thicker ends of the wedges 31 and 31. With this, the wedges 31 and 31 are biased in opposite directions as shown by respective arrows.

As is seen from Figs. 5 and 12, the bottom of the bottomed cylindrical portion 5d of the connecting shaft unit 27 is formed on its outer surface with an arcuate projection 33 that is arranged in the annular space 30 between the two wedges 31 and 31. As shown in Fig. 12, between a thinner end of each wedge 31 and an end of the arcuate projection 33, there is kept a certain clearance.

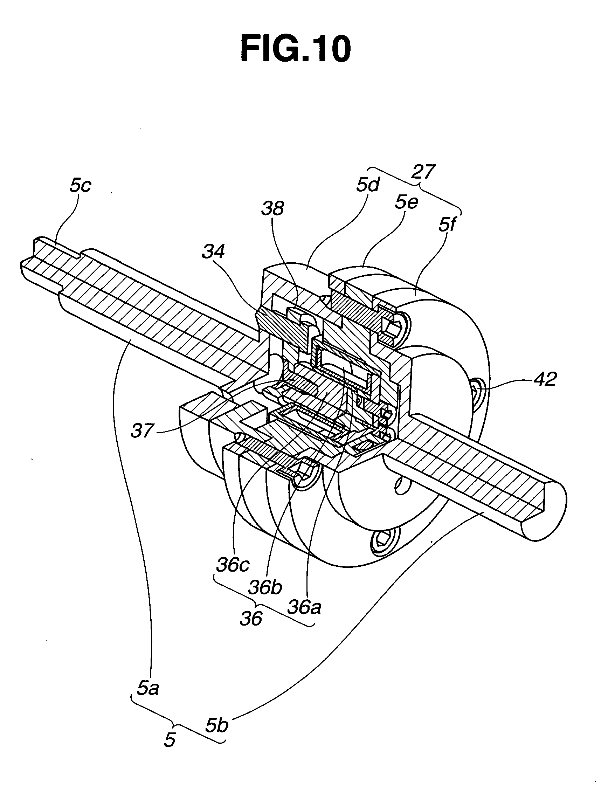

As is seen from Figs. 10 and 12, and Fig. 5, there is arranged a lock shaft 34 that is projectable axially from the bottom of the bottomed cylindrical portion 5d. That is, in Fig. 5, the lock shaft 34 is projectable in a leftward direction.

As is seen from Fig. 12, the lock shaft 34 is projectable into a position defined between the mutually facing thicker ends of the wedges 31 and 31. For this purpose, the lock shaft 34 is placed on an imaginary circle defined by the arcuate projection 33 at a position that has an equal distance from each end of the arcuate projection 33. In other words, the lock shaft 34 is placed at a diametrically opposed position of a center part of the arcuate projection 33 with respect to a center of the annular raised portion 28c of the internal gear 28.

In the following, a functional relation between the arcuate projection 33 and the lock shaft 34 will be described in detail with reference to the drawings.

As is seen from Figs. 4 and 12, the internal gear 28 and the connecting shaft unit 27 rotate relative to each other. As is seen from these drawings, the arcuate projection 33 projected from the connecting shaft unit 27 is placed in the annular space 30 on the side of the internal gear 28 at the position between the thinner ends of the two wedges 31 and 31. Accordingly, even when the internal gear 28 and the connecting shaft unit 27 make the relative rotation therebetween, the lock shaft 34 is constantly placed in a position that corresponds to the position between the mutually facing thicker ends of the wedges 31 and 31.

Thus, when projected, the lock shaft 34 is led into the position between the mutually facing thicker ends of the wedges 31 and 31. Under this condition, there is formed a certain space between the thinner end of each wedge 31 and each end of the arcuate projection 33, and thus, it becomes possible that the timing when the lock shaft 34 contacts the thicker end of one wedge 31 is earlier than that when the end of the arcuate projection 33 contacts the thinner end of the other wedge 31. Accordingly, even when the lock shaft 34 applies a certain force to one wedge 31 to move the same, the biasing force of the circular spring 32 by which the two wedges 31 and 31 are biased in opposite directions causes the other wedge 31 to stop, and thus, due to such wedge effect, a relative rotation between the paired wedges 31 and 31, the external gear 29 and the internal gear 28 is suppressed and thus they take a locked condition. As a result, the eccentric gear unit 26 becomes connected to the connecting shaft unit 27 through the lock shaft 34 thereby to effect an integral rotation therebetween.

In the following, a drive device for axially moving the lock shaft 34 in forward and rearward directions relative to the end surface of the connecting shaft unit 27 will be described.

As is seen from Fig. 5, between the flange part 5e and the other flange part 5f, there is disposed an actuator holder 35 that has an electromagnetic actuator 36 mounted therein.

The electromagnetic actuator 36 comprises a fixed cylindrical iron core 36a tightly mounted in the connecting shaft unit 27, a coil 36b wound around the iron core 36a, a movable iron core 36c axially movably received in a bore of the fixed cylindrical iron core 36a and a coil (or biasing) spring 36d received in a bore formed in the movable iron core 36c. To a leading end of the movable iron core 36c, there is fixed a shaft supporting member 38 through a bolt 37. As shown, the shaft supporting member 38 extends perpendicular to the axis of the movable iron core 36c. The shaft supporting member 38 has at a leading end portion thereof an opening in which a base end of the lock shaft 34 is tightly fitted.

In order to assure a smoothed insertion or projection of the lock shaft 34 into a desired position between the mutually facing thicker ends of the two wedges 31 and 31, the lock shaft 34 has a conical head as is seen from Figs. 5 and 10. As is seen from Fig. 12, for the same reason, the thicker ends of the wedges 31 and 31 are formed with the above-mentioned guide grooves 31a and 31a respectively. These guide grooves 31a and 31a are used for hooking the curled ends of the circular spring 32.

Referring back to Figs. 4 and 5, a second housing 40 is arranged that houses therein the eccentric gear unit 26 and the connecting shaft unit 27. The second housing 40 is secured to a right end surface of the first housing 21 (see Fig. 4).

In the second housing 40, the output shaft 5 is arranged to make about 1.5 turns from a neutral position in each direction. Accordingly, for feeding an electric power to the coil 36b mounted to the rotatable connecting shaft unit 27 from the outside of the second housing 40, there are provided cables which extend between the second housing 40 and the connecting shaft unit 27 and have a certain slack. For this, a cable drum 41 containing therein a slacked part of the cables is connected to a bottom of the second housing 40.

When an abnormality takes place in the steering operation, it is necessary to rotate the output shaft 5 and the assist shafts 6 and 7 together like a single unit. In this case, the electric motor 24 is turned by a rotation of the case 8. As has been mentioned hereinabove, for permitting such rotation transmission from the case 8 to the motor 24, a certain setting is made in the arrangement between the worm wheel 14 and the worm 15.

In the following, operation of the variable gear ratio steering device 1000 of the first embodiment will be described with the aid of the drawings.

When the motor 24 is deenergized, the assist shafts 6 and 7 are not rotated and thus the case 8 is fixed. Accordingly, as is seen from Fig. 1A, when the input shaft 4 is rotated in a clockwise direction by a number (N = 1) of rotation, the gear holder 11 and the output shaft 5 are forced to rotate in the same direction (viz., clockwise direction) by a number (N = 0.5) of rotation. That is, under such condition, the bevel gear 10 is fixed and thus the bevel gears 12 and 13 are forced to make a revolution while rotating.

Under normal condition, the electromagnetic actuator 36 is energized. Accordingly, as is seen from Fig. 5, the electromagnetic actuator 36 attracts the movable iron core 36c thereby to cause the lock shaft 34 to take a retracted position against the biasing force of the return spring 36d. Accordingly, as is seen from Fig. 12, the arcuate projection 33 raised from the connecting shaft unit 27 (see Fig. 5) is circularly moved in the annular space 30 of the eccentric gear unit 26 while pushing the paired wedges 31 and 31 in one circumferential direction. Thus, the paired wedges 31 and 31 are moved circumferentially in the annular space 30, and thus, an actually meshed eccentric zone between the external gear 29 and the internal gear 28 is moved in a circumferential direction, and thus, per each rotation of the connecting shaft unit 27, the external gear 29 is forced to make repeatedly idle turning in a direction opposite to that of the connecting shaft unit 27 by a number corresponding to a difference in number between the teeth of the internal gear 28 and those of the external gear 29. Under this condition, the paired wedges 31 and 31 are rotated while being biased in opposite directions by the spring 32. Because the external gear 29 makes the idle turning against the external gear 28, the arcuate projection 33 can turn in either direction together with the paired wedges 31 and 31 in the annular space 30, and thus, a so-called assist mode is established wherein rotation of the connecting shaft unit 27 relative to the internal gear 28 is permitted.

In this assist mode, the electric motor 24 can rotate the case 8 and the assist shafts 6 and 7 in a desired direction in accordance with a vehicle speed.

When, in a middle speed running of the vehicle, the input shaft 4 is turned in a clockwise direction by a steering wheel (not shown), the electric motor 24 is energized to turn at a middle speed in a direction to cause the case 8 and the assist shafts 6 and 7 to turn in the same clockwise direction. With this, the rotation ratio (viz., ratio of rotation) between the input shaft 4 and the output shaft 5 becomes increased.

When, like in the above-mentioned case, the electric motor 24 is not energized and thus not rotated, the number (N) of rotation of the output shaft 5 is 0.5 and thus the rotation ratio between the input shaft 4 and the output shaft 5 is 1 : 0.5.

While, when the motor 24 is energized in case of the middle speed running of the vehicle, the number (N) of rotation of the output shaft 5 becomes about 1.0, and thus the rotation ratio between the input and output shafts 4 and 5 becomes about 1:1.

In a lower speed running of the vehicle, the electric motor 24 is energized to run at a higher speed. With this, the rotation ratio between the input and output shafts 4 and 5 is increased and the number (N) of rotation of the output shaft 5 shows a relation " 1 < N < 2 ".

While, in a higher speed running of the vehicle, the electric motor 24 is energized to run at a lower speed. With this, the rotation ratio between the input and output shafts 4 and 5 is decreased and thus the number (N) of rotation of the output shaft 5 shows a relation" 0.8 < N < 1 ".

While, in case of failure of the steering device 1000, power supply to the electromagnetic actuator 36 stops. Accordingly, as will be understood from Fig. 5, in such condition, the electromagnetic actuator 36 does not attract the movable iron core 36c and thus due to the biasing force of the return spring 36d, the movable iron core 36c is projected leftward in the drawing causing the lock shaft 34 to project leftward. In this case, as is understood from Fig. 12, the lock shaft 34 is projected into a position between the mutually facing thicker ends of the paired wedges 31 and 31. (As has been mentioned hereinabove, the lock shaft 34 is constantly and properly positioned relative to the paired wedges 31 and 31.)

The head of the lock shaft 34 is shaped conical and the axial movement of the lock shaft 34 is guided by the guide grooves 31a and 31a of the thicker ends of the wedges 31 and 31. Accordingly, even in a condition wherein the paired wedges 31 and 31 are turned in a circumferential direction by the arcuate projection 33, the head of the lock shaft 34 is easily projected into the position between the mutually facing thicker ends of the wedges 31 and 31. Due to the projection of the head of the lock shaft 34 into the position, a certain clearance is provided between the arcuate projection 33 and the thinner end of one of the wedges 31 and 31 and at the same time the thicker end of the other wedge 31 is brought into engagement with the lock shaft 34.

Now, the lock shaft 34 pushes the thicker end of one wedge 31 in one direction and the other wedge 31 is biased in the other direction due to the biasing force of the circular spring 32, and thus, the paired wedges 31 and 31 are forced to move away in opposite directions thereby to introduce a wedge effect. Due to this wedge effect, a locked condition is established wherein the paired wedges 31 and 31, the external gear 29 and the internal gear 28 don't make an integral rotation therebetween. That is, as is seen from Fig. 1B, the output shaft 5 and the assist shaft 6 are coupled together to establish a condition to make an integral rotation therebetween, and the input shaft 4 and the output shaft 5 are forced to rotate in the same direction and the rotation ratio between the two shafts 4 and 5 becomes 1:1.

That is, upon occurrence of failure of the steering device 1000, the device 1000 is shifted to a normal mode.

Under this normal mode, the output shaft 5 and the assist shaft 6 are rotated together like a single unit. Thus, as is understood from Fig. 1B, in this case, the bevel gears 12 and 13 meshed with the bevel gear 10 are in a fixed condition. Since the other bevel gear 9 is meshed with the fixed bevel gears 12 and 13, the input shaft 4, the gear holder 11 and the output shaft 5 are rotated together like a single unit. That is, as is mentioned hereinabove, the input and output shafts 4 and 5 are rotated in the same direction and the rotation ratio therebetween is 1 : 1, which provides the normal mode that is normally exhibited by a conventional steering device that has no variable gear ratio mechanism. Thus, in case of failure of the steering device 1000 of the invention, a safety driving, more specifically, safety steering of the vehicle is assured.

Under this normal mode, the case 8 that is driven by the electric motor 24 in a normal operation condition is driven by the input shaft 4 from the opposite direction. Accordingly, the worm 15 and the electric motor 24 are forced to rotate by the worm wheel 14 that is integral with the case 8. As is mentioned hereinabove, since the worm 15 and the worm wheel 14 are so arranged as to permit a rotation transmission from the worm wheel 14 to the worm 15, the input shaft 4 can rotate the output shaft 5 while rotating the non-energized electric motor 24.

In the variable gear ratio steering device 1000 of the first embodiment of the present invention, due to usage of the eccentric gear unit 26, the connecting shaft unit 27 can be connected to the internal gear 28 irrespective of the direction in which the connecting shaft unit 27 connected to the output shaft 5 is rotated and irrespective of an angular position that is taken by the connecting shaft unit 27. Accordingly, upon occurrence of abnormality in operation of the steering device 1000, the action for changing the mode to the normal mode is instantly carried out. Thus, even under such abnormality, safety driving of the vehicle is assured. As is mentioned hereinabove, in the normal mode, the input and output shafts 4 and 5 are rotated in the same direction and the rotation ratio therebetween is 1 : 1. Of course, when the abnormality is solved, the mode of the steering device 1000 can be returned back to the assist mode easily.

In the above-mentioned first embodiment 1000, the planetary gear unit 200 using bevel gears is used as a gear mechanism. However, if desired, other type planetary gear unit or other gear mechanism may be used. In the above-mentioned first embodiment 1000, there is employed a connecting mechanism by which the output shaft 5 and the assist shaft 6 are connected to make an integral rotation therebetween. However, if desired, there may be employed a connecting mechanism by which the input shaft 4 and the assist shaft 7 are connected to make an integral rotation therebetween.

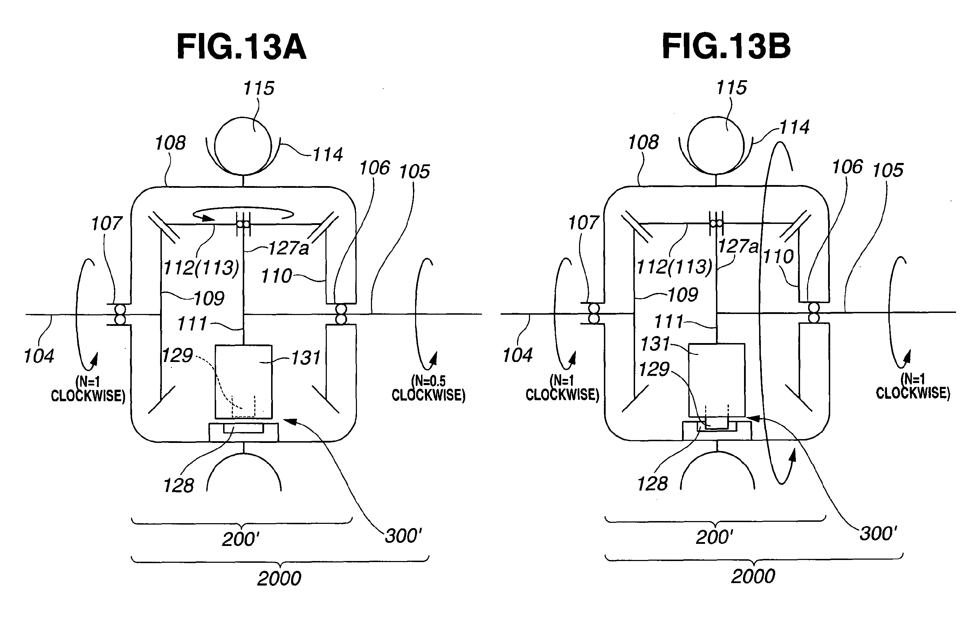

In the following, a variable gear ratio steering device 2000 of a second embodiment of the present invention will be briefly described with reference to Figs. 13A and 13B that schematically show the principle of the invention.

As is seen from these drawings, the variable gear ratio steering device 2000 of the second embodiment generally comprises a differential gear unit 200' as a gear mechanism and a connecting unit 300'.

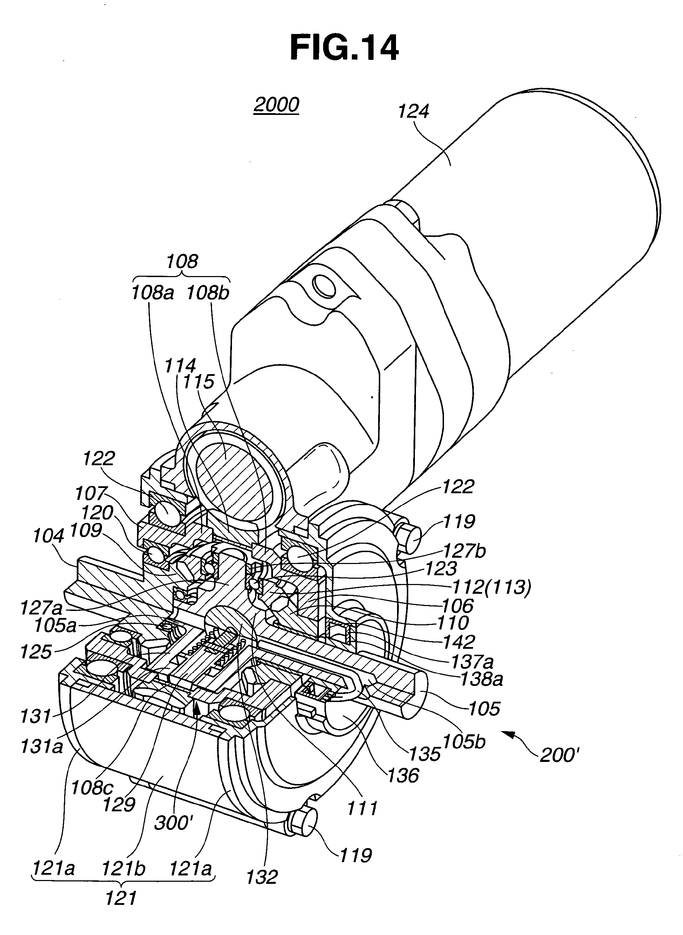

The differential gear unit 200' comprises an input shaft 104 that is connected to a steering wheel (not shown), an output shaft 105 that is coaxial with the input shaft 104 and rotatable in the same direction as the input shaft 104 and connected to steered road wheels (not shown) and hollow assist shafts 106 and 107 that are coaxial with the input and output shafts 104 and 105 and connected to an output shaft of an electric motor 124 (see Fig. 14) for varying a ratio of rotation of the output shaft 105 relative to that of the input shaft 104, that is, a rotation ratio between the input and output shafts 104 and 105. As shown, the input shaft 104 and output shaft 105 are arranged on a common axis, and the hollow assist shafts 106 and 107 are rotatably supported by the input and output shafts 104 and 105 respectively. A case 108 is integrally connected to the assist shafts 106 and 107, so that the case 108 is rotatably supported by the input and output shafts 104 and 105.

As shown, the input shaft 104 and the assist shaft 106 are provided with bevel gears 109 and 110 (or first and second gears) respectively. Meshed with the bevel gears 109 and 110 are respective bevel gears 112 and 113 which are parts of a differential gear unit. The bevel gear 113 is not shown in the drawing.

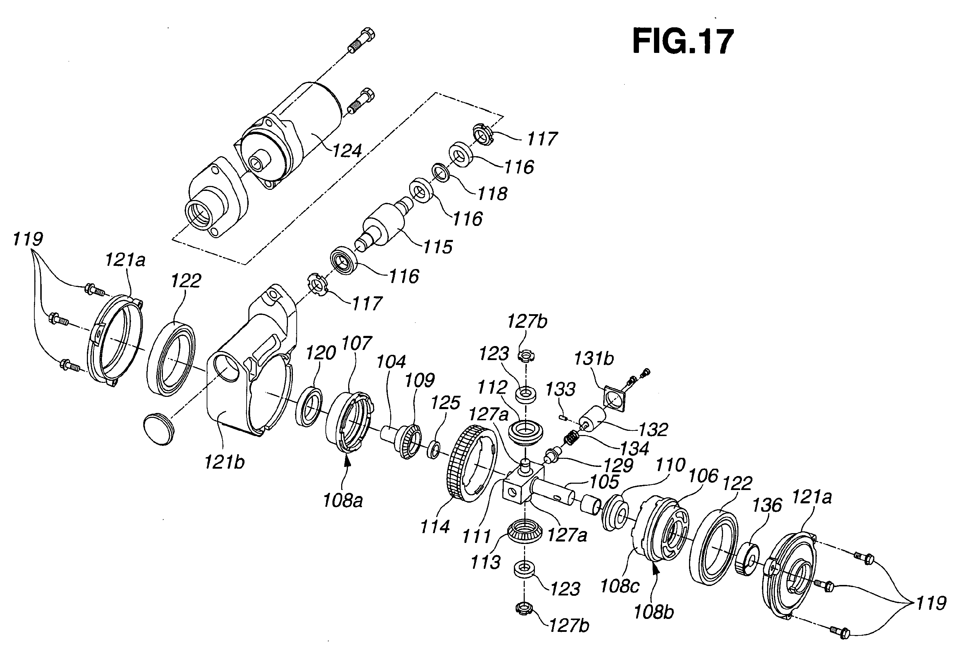

Between the bevel gears 109 and 110, there is arranged a rotatable holder 111. The shape of the rotatable holder 111 will be well understood from Fig. 17.

As is seen from Figs. 13A and 17, the rotatable holder 111 is provided with two shaft portions 127a and 127a that extend in opposite directions. The above-mentioned bevel gears 112 and 113 are rotatably disposed on the two shaft portions 127a and 127a respectively. As is seen from the drawings, the output shaft 105 passes through a center portion of the bevel gear 110 and is connected to the rotatable holder 111.

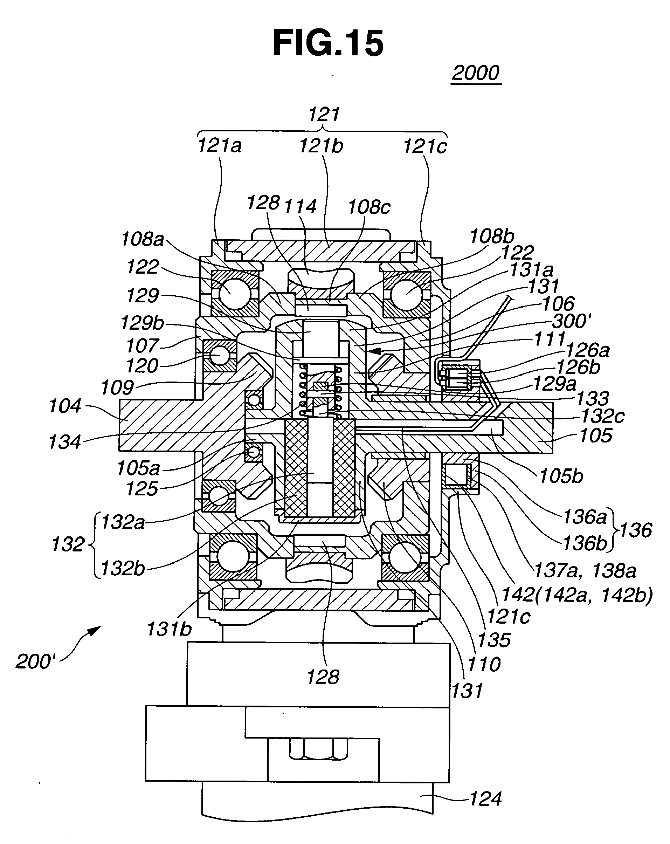

An outer surface of the case 108 is provided with a worm wheel 114 that is meshed with a worm 115 fixed to the output shaft of the electric motor 124 (see Fig. 15).

When the electric motor 124 is deenergized, the input and output shafts 104 and 105 rotate in the same direction and a rotation ratio between the input and output shafts 104 and 105 is 1 : 0.5.

The connecting unit 300' functions to couple the output shaft 105 and assist shaft 6 together to make an integral rotation therebetween. That is, once there occurs an abnormal operation in driving and control of the electric motor 124, the output shaft 105 and the assist shaft 6 are coupled, so that the input and output shafts 104 and 105 are rotated in the same direction and the rotation ratio between the input and output shafts 104 and 105 becomes 1 : 1.

The connecting unit 300' comprises a lock pin 129 that is projectable radially outward to a position between the bevel gears 112 and 113, and a plurality of lock recesses 128 that are formed in an inner surface of the case 8. That is, upon operation, the lock pin 129 is projected into one of the lock recesses 128 to achieve a locked connection between the rotatable holder 111 and the case 108.

That is, in such a locked condition, the case 108 and the rotatable holder 111 are tightly coupled, and thus the bevel gears 112 and 113 take a fixed condition while meshing with the bevel gear 110. Thus, the four bevel gears 109, 110, 112 and 113 are united and thus rotate together like a single unit, so that the input and output shafts 104 and 105 rotate in the same direction and the rotation ratio therebetween becomes 1:1.

It is to be noted that the meshing between the worm 115 and the worm wheel 114 is so made as to permit driving or rotation of the worm 115 from the worm wheel 114. For this permission, a suitable lead angle has to be defined between these worm 115 and worm wheel 114.

The above-mentioned abnormal operation a condition in which a rotation angle or rotation number of the output shaft 105 relative to that of the input shaft 104 becomes out of a predetermined degree or range. In such abnormal condition, electric power supply to the electric motor 124 is blocked thereby to force the connecting unit 300' to cause the locked condition between the case 108 and the rotatable holder 111.

In the following, the detail of the variable gear ratio steering device 2000 of the second embodiment will be described with reference to Figs. 14 to 16.

As is clearly seen from Figs. 14 to 16, particularly Fig. 14, in the planetary gear unit 200', the input shaft 104 connected to the steering wheel (not shown) and the output shaft 105 connected to the steered road wheels (not shown) are aligned and arranged to rotate in the same direction about the common axis thereof.

As is seen from Fig. 15, for varying the rotation ratio between the input and output shafts 104 and 105, the hollow assist shafts 106 and 107 are employed. The assist shaft 107 is rotatably disposed about the input shaft 104 through a bearing 120. Since the case 108 is integrally connected to the assist shafts 106 and 107, the case 108 is rotatable about the aligned input and output shafts 104 and 105.

To an inner end of the input shaft 104, there is integrally formed the bevel gear 109, and to an inner end of the assist shaft 106, there is tightly fitted the bevel gear 110. These bevel gears 109 and 110 are meshed with the bevel gears 112 and 113 respectively.

As is understood from Figs. 17, the bevel gears 112 and 113 are rotatably and respectively disposed about the shaft portions 127a and 127a of the rotatable holder 111. Each bevel bear 112 or 113 is placed in position by means of a nut 127b and a bearing 123. As is understood from this drawing, the two shaft portions 127a and 127a extend in radially opposite directions with respect to the common axis about which the input and output shafts 104 and 105 rotate. Furthermore, to the rotatable holder 111, there is connected a left end of the output shaft 105 that passes through the center opening of the bevel gear 110.

As is seen from Fig. 15, the output shaft 105 has a smaller diameter left end 105a that is rotatably received through a bearing 125 in a circular recess formed in a center part of the bevel gear 109.

As is seen from Figs. 15 and 17, the case 108 comprises two cylindrical parts 108a and 108b that are united through the worm wheel 114. As is seen from Fig. 15, a toothed portion of the worm wheel 114 is exposed to the outside of the case 108.

As is well seen from Fig. 15, the case 108 is rotatably received in a housing 121 through two axially spaced bearings 122 and 122. As shown, the housing 121 comprises a pair of side housings 121a and 121a and a center housing 121b that is put between the side housings 121a and 121a. As is seen from Fig. 17, for uniting these three parts 121a, 121a and 121b together, a plurality of connecting bolts 119 are used.

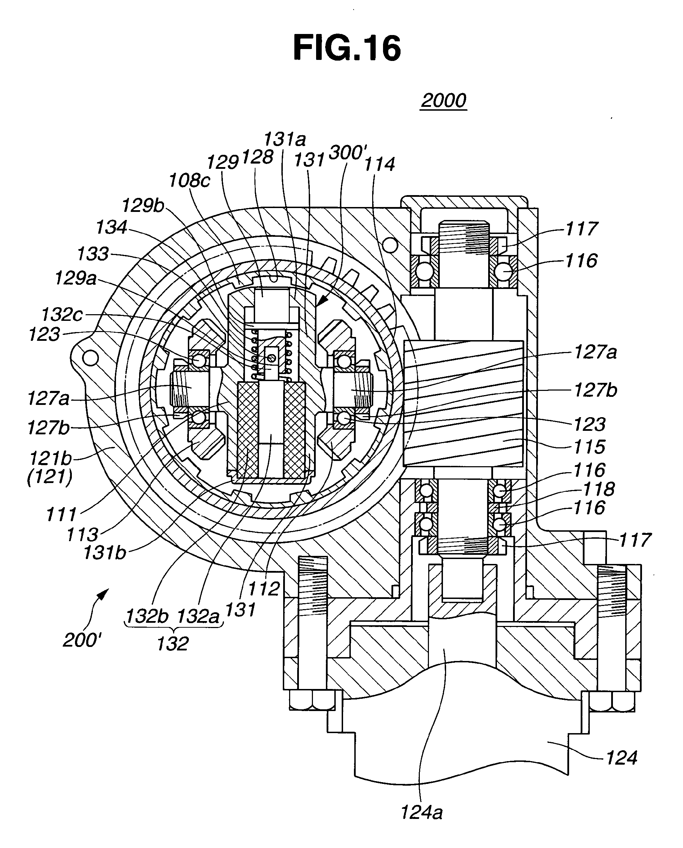

As is seen from Fig. 16, the worm 115 meshed with the worm wheel 114 is placed outside of the housing 121 in a manner to extend perpendicular to an axis of the worm wheel 114. The worm 115 is rotatably received through three bearings 116, two nuts 117 and a collar 118 in a housing (no numeral) that is bolted to the housing 121. The worm 115 is coaxially connected at one end thereof to an output shaft 124a of the electric motor 124 to be driven when the motor 124 is energized.

As will be understood from Figs. 16 and 17, the center housing 121b of the housing 121 has an opening through which a cylindrical toothed part of the worm 115 is exposed to the interior of the housing 121 and meshed with the worm wheel 114.

In the following, the detail of the connecting unit 300' will be described, which functions to selectively couple the output shaft 105 and the assist shaft 106 together to make an integral rotation therebetween.

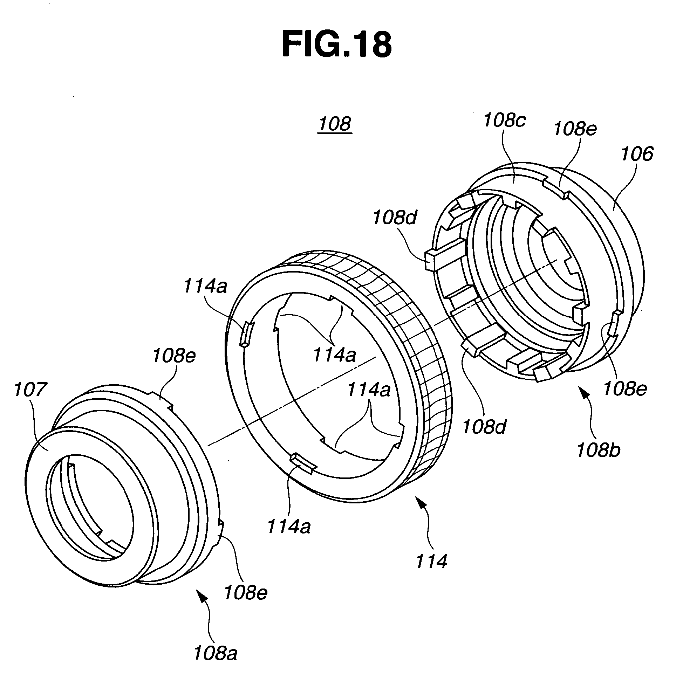

As is seen from Figs. 14 and 18, the case 108 is arranged to enclose the rotatable holder 111 and integral with the assist shaft 106. As shown in Fig. 18, the right cylindrical part 108b of the case 108 that has the assist shaft 106 is formed with a cylindrical wall portion 108c. The cylindrical wall portion 108c has at its inner wall a plurality of axially extending ribs 108d which serve as positioning means. That is, when the two cylindrical parts 108a and 108b are properly coupled, the ribs 108d are engaged with corresponding recesses formed in the right cylindrical part 108 to establish a relative centering of these two parts 108a and 108b, and at the same time, the worm wheel 114 is intimately and concentrically mounted on the cylindrical wall portion 108c. For this mounting, the cylindrical wall portion 108c is somewhat recessed as shown. As is seen from the drawing (Fig. 18), once the coupling between the two parts 108a and 108b is completed, pawls 108e formed on the two parts 108a and 108b are fitted in recesses 114a formed in the worm wheel 114. With this fitting, the worm wheel 114 is tightly mounted on the cylindrical case 108. In the illustrated example, four pawls 108e are provided on each part 108a or 108b, and thus, four recesses 114a are provided on each axial end of the worm wheel 114.

As is seen from Fig. 18, the cylindrical wall portion 108c is formed at its inner wall with a plurality of equally spaced lock recesses 128 that are arranged about the axis of the cylindrical wall portion 198c. As will become apparent as the description proceeds, such lock recesses 128 are used as an element for tightly coupling the case 108 and the rotatable holder 111.

As is seen from Figs. 15 and 17, the lock pin 129 that is engageable with one of the lock recesses 128 is retractably held by the rotatable holder 111. As is seen from Fig. 17, the lock pin 129 is projectable in a direction perpendicular to a common axis of the two shaft portions 127a and 127a of the rotatable holder 111.

In the following, a mechanism for moving the lock pin 129 will be described with the aid of the drawings.

As is seen from Fig. 15, the rotatable holder 111 is formed with a pair of aligned cylindrical holder portions 131 and 131 of which common axis extends perpendicular to the common axis of the two shaft portions 127a and 127a. One of the holder portions 131 and 131 has an electromagnetic actuator 132 installed therein and has a lid 131b connected thereto. The other of the holders 131 and 131 has the lock pin 129 movably installed therein.

The electromagnetic actuator 132 comprises an axially movable plunger 132a movably received in the holder 131 and an annular solenoid 132b that functions to attract therein the plunger 132a when energized. A smaller diameter head portion 132c of the plunger 132a is received in a bore 129a formed in a tail part of the lock pin 129. A connecting pin 133 is used for connecting the smaller diameter head portion 132c of the plunger 132a and the tail part of the lock pin 129, as shown.

The lock pin 129 is provided at a middle part thereof with a flange 129b. The upper cylindrical holder portion 131 as viewed in Fig. 15 has a stopper head 131a against which the flange 129b abuts when the stopper pin 129 is projected outward by a given distance.

Between the flange 129b and the solenoid 132b, there is arranged a coil spring 134 by which the lock pin 129 is biased upward in Fig. 15, that is, in a direction to project outward.

In the housing 121, the rotatable holder 111 (more specifically the output shaft 105) is arranged to make about 1.5 turns from a neutral position in each direction. Accordingly, for feeding an electric power to the electromagnetic actuator 132 on the rotatable holder 111 from the outside of the housing 121, there are provided cables 135 which extend from the electromagnetic actuator 132 and run in an axially extending bore 105b formed in the output shaft 105. As shown, the bore 105b has an open portion from which the cables 135 are exposed to the outside of the output shaft 105.

As is seen from Figs. 15 and 17, to the output shaft 105 at a position outside of the housing 121, there is connected a first shaft case 136.

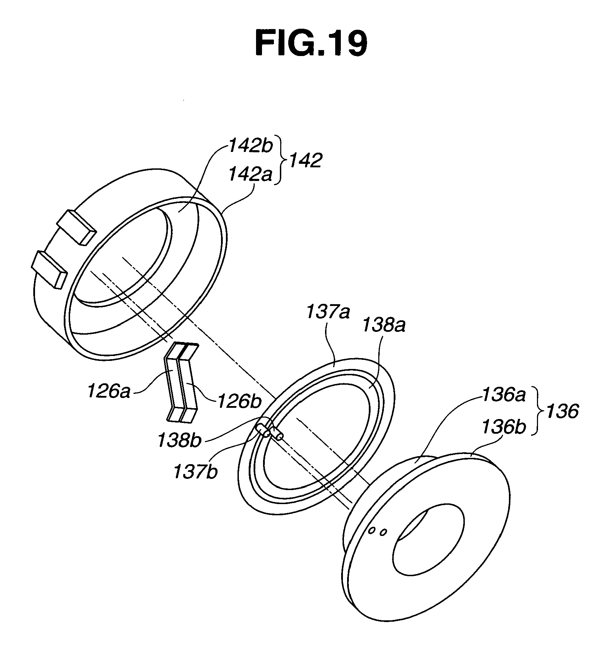

As is seen from Figs. 15 and 19, the first shaft case 136 comprises a cylindrical portion 136a and a circular flange portion 136b, and as is seen from Fig. 19, to an inner peripheral surface of the flange portion 136b, there are concentrically attached outer and inner conductive ring members 137a and 138a. Upon attachment, projected terminals 137b and 138b integrally and respectively formed on the outer and inner conductive ring members 137a and 138a pass through respective openings formed in the flange portions 136b. To the projected terminals 137b and 138b, there are connected leading ends of the above-mentioned cables 135 respectively.

As is seen from Figs. 15 and 19, to a portion of the housing 121 through which the output shaft 105 passes, there is mounted a second shaft case 142 in a manner to enclose the above-mentioned first shaft case 136.

As is seen from Fig. 19, the second shaft case 142 comprises a cylindrical wall 142a and an apertured bottom wall 142b. As is seen from Fig. 15, upon assembly, the second shaft case 142 is received in a cylindrical bearing holder portion 121c formed on the housing 121. As shown in Fig. 19, to the apertured bottom wall 142b of the second shaft case 142, there are connected two brushes 126a and 126b. Leading ends of the brushes 126a and 126b are resiliently and slidably put on the outer and inner conductive ring members 137a and 138a. The brushes 126a and 126b are connected to an electric power source (not shown) through cables. Thus, even when the first and second shaft cases 136 and 142 make a relative rotation therebetween, an electric connection between the electric power source and the electromagnetic actuator 132 is maintained and assured.

When an abnormality occurs in the steering operation, it is necessary to rotate the output shaft 105 and the assist shafts 106 and 107 together like a single unit. In this case, the electric motor 124 is turned by a rotation of the case 108. For permitting such rotation transmission from the case 108 to the motor 124, a certain setting is made in the arrangement between the worm wheel 114 and the worm 115.

In the following, operation of the variable gear ratio steering device 200 of the second embodiment will be described with the aid of the drawings.

When the motor 124 is deenergized, the assist shafts 106 and 107 are not rotated and thus the case 108 is fixed. Accordingly, as is seen from Fig. 13A, when the input shaft 104 is rotated in a clockwise direction by a number (N = 1) of rotation, the rotatable holder 111 and the output shaft 105 are forced to rotate in the same direction (viz., clockwise direction) by a number (N = 0.5) of rotation. That is, under such condition, the bevel gear 110 is fixed and thus the bevel gears 112 and 113 are forced to make revolution while rotating.

Under normal condition, the electromagnet 136 is energized. Accordingly, as is seen from Fig. 15, the electromagnet 136 attracts the plunger 132a thereby to move back the lock pin 129 against the biasing force of the coil spring 134. Accordingly, the lock pin 129 is removed from one of the lock recesses 128 into which the lock pin 129 has been projected. Upon this, the rotatable holder 111 that is integral with the output shaft 105 is permitted to rotate relative to the case 108. That is, a relative rotation between the output shaft 105 and the case 108 is permitted. Thus, a so-called assist mode is established.

In this assist mode, the electric motor 124 can rotate the case 108 and the assist shafts 106 and 107 in a desired direction in accordance with a vehicle speed.

When, in a middle speed running of the vehicle, the input shaft 104 is turned in a clockwise direction by a steering wheel (not shown), the electric motor 124 is energized to turn the case 108 and the assist shafts 106 and 107 in the same (viz., clockwise) direction. With this, a rotation ratio between the input and output shafts 104 and 105 becomes increased.

When, like in the above-mentioned case, the electric motor 124 is not energized and thus not rotated, the number (N) of rotation of the output shaft 105 is 0.5 and thus the rotation ratio between the input and output shafts 104 and 105 is 1 : 0.5.

While, when the motor 124 is energized in case of the middle speed running of the vehicle, the number (N) of rotation of the output shaft 105 becomes about 1.0, and thus the rotation ratio between the input and output shafts 104 and 105 becomes about 1:1.

In a lower speed running of the vehicle, the electric motor 124 is energized to run at a higher speed. With this, the rotation ratio between the input and output shafts 104 and 105 is increased and the number (N) of the rotation of the output shaft 105 shows a relation " 1 < N < 2 ".

While, in a higher speed running of the vehicle, the electric motor 124 is energized to run at a lower speed. With this, the rotation ratio between the input and output shafts 104 and 105 is decreased and thus the number (N) of rotation of the output shaft 105 shows a relation " 0.8 < N < 1 ".

While, in case of failure of the steering device 2000, power supply to the electromagnet actuator 132 stops. Accordingly, as will be understood from Fig. 15, in such condition, the solenoid 132b does not attract the plunger 132a and thus due to the biasing force of the spring 134, the lock pin 129 is projected radially outward in the drawing.

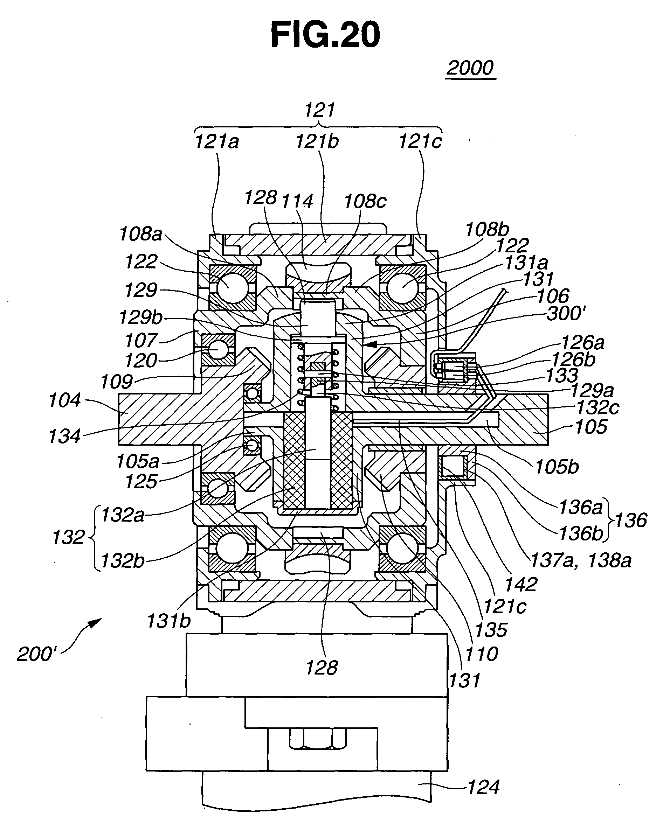

Thus, as is seen from Fig. 20, the leading end of the lock pin 129 is projected into one of the lock recesses 128 of the case 108 thereby to unite and rotate the rotatable holder 111 and the case 108 together. Thus, as is understood from Fig. 13B, the output shaft 105 and the assist shaft 106 are united together to make an integral rotation. That is, the input shaft 104 and the output shaft 106 are forced to rotate in the same direction and the rotation ratio between the two shafts 104 and 105 becomes 1 : 1. That is, upon occurrence of failure of the steering device 2000, the device 2000 is shifted to a normal mode.

Under this normal mode, the output shaft 105 and the assist shaft 106 are rotated together like a single unit. Thus, as is understood from Fig. 13B, in this case, the bevel gears 112 and 113 meshed with the bevel gear 110 are in a fixed condition. Since the other bevel gear 109 is meshed with the fixed bevel gears 112 and 113, the input shaft 104, the rotatable holder 111 and the output shaft 105 are rotated together like a single unit. That is, as is mentioned hereinabove, the input and output shaft 104 and 105 are rotated in the same direction and the rotation ratio therebetween is 1 : 1, which provides the normal mode that is normally exhibited by a conventional steering device that has no variable gear ratio mechanism. Thus, in case of failure of the steering device 2000, a safety driving, more specifically, safety steering of the vehicle is assured.

Under this normal mode, that case 108 that is driven by the electric motor 124 in a normal operation condition is driven by the input shaft 104 from the opposite direction. Accordingly, the worm 115 and the electric motor 124 are forced to rotate by the worm wheel 114 that is integral with the case 108. As is mentioned hereinabove, since the worm 115 and the worm wheel 114 are so arranged as to permit a rotation transmission from the worm wheel 114 to the worm 115, the input shaft 104 can rotate the output shaft 105 while rotating the non-energized electric motor 124.

In the variable gear ratio steering device 2000 of the second embodiment of the invention, since the connecting unit 300' is arranged between the bevel gears 112 and 113 that are held by the rotatable holder 111, the steering device 2000 can be made compact in size.

In the above-mentioned second embodiment 2000, the planetary gear unit 200' using bevel gears is used as a gear mechanism. However, if desired, other type planetary gear unit or other gear mechanism may be used.

The entire contents of Japanese Patent Applications 2006-207522 filed July 31, 2006 and 2006-285674 filed October 20, 2006 are incorporated herein by reference.

Although the invention has been described above with reference to the embodiments of the invention, the invention is not limited to such embodiments as described above. Various modifications and variations of such embodiments may be carried out by those skilled in the art, in light of the above description.

## Claims

1. A variable gear ratio steering device comprising:
an input shaft adapted to connect to a steering wheel;
an output shaft adapted to connect to steered road wheels, the output shaft being coaxial with the input shaft and rotatable in the same direction as the input shaft;
a gear mechanism arranged between the input and output shafts and powered by an electric motor, the gear mechanism including an assist shaft by which a rotation ratio between the input and output shafts is varied with the aid of the electric motor; and
a connecting unit that has a first condition wherein the output shaft and the assist shaft are permitted to make a relative rotation therebetween thereby to cause the gear mechanism to operate normally and a second condition wherein the output shaft and the assist shaft are united together thereby to induce an integral rotation therebetween, the second condition inducing a condition wherein the output shaft is rotated in the same direction as the input shaft and the rotation ratio between the input and output shafts is 1 : 1.

2. A variable gear ratio steering device as claimed in Claim 1, further comprising a failsafe means that causes the connecting unit to take the second condition in case of failure of the steering device.

3. A variable gear ratio steering device as claimed in Claim 1, in which the connecting unit comprises:
a first shaft connected to the assist shaft;
a second shaft connected to one of the input and output shafts, the second shaft being coaxial with the first shaft and rotatable relative to each other; and
an electric lock device arranged between the first and second shafts to selectively connect and disconnect the first and second shafts.

4. A variable gear ratio steering device as claimed in Claim 3, in which the electric lock device is so constructed as to couple the first and second shafts even when the second shaft takes any angular position relative to the first shaft.

5. A variable gear ratio steering device as claimed in Claim 4, in which the electric lock device is so constructed as to couple the first and second shafts irrespective of a direction in which the second shaft rotates relative to the first shaft.

6. A variable gear ratio steering device as claimed in Claim 3, in which the electric lock device comprises:
an internal gear provided by one of the first and second shafts;
an external gear meshed with the internal gear, the number of teeth of the external gear being less than that of the internal gear;
an annular portion raised from a center portion of the internal gear;
a circular center opening provided by the external gear;
an annular space defined between a cylindrical outer wall of the circular center opening and an outer cylindrical wall of the annular portion;
two wedges, each having thicker and thinner ends, the wedges being received in the annular space in a manner to face to each other at their thicker ends;
a biasing spring for biasing the thicker ends of the wedges in a direction away from each other;
a connecting shaft unit that has an arcuate projection projected from the other of the first and second shafts, the arcuate projection being arranged in the annular space between the thinner ends of the wedges;
a lock shaft that is rotatable together with the connecting shaft unit and projectable into the annular space between the thicker ends of the wedges; and
an electromagnetic actuator that permits the lock shaft to project into the annular space between the thicker ends of the wedges when deenergized.

7. A variable gear ratio steering device as claimed in Claim 6, in which the electric lock device is so constructed that when abutment of the lock shaft against the thicker end of one of the wedges takes place prior to abutment of the arcuate projection against the thinner end of the other of the wedges, a wedge effect is produced thereby to suppress relative rotation between the wedges, the external gear and the internal gear.

8. A variable gear ratio steering device as claimed in Claim 6, in which the lock shaft has a conical head to assure a smoothed insertion of the same into a desired position between the mutually facing thicker ends of the two wedges.

9. A variable gear ratio steering device as claimed in Claim 6, in which the electromagnetic actuator comprises:
a fixed cylindrical iron core tightly mounted in the connecting shaft unit;
a coil wound around the fixed cylindrical iron core;
a movable iron core axially movably received in a bore of the fixed cylindrical iron core, the movable iron core being connected to the lock shaft to move therewith; and
a biasing spring for biasing the movable iron core in a direction to project the lock shaft into the annular space.

10. A variable gear ratio steering device as claimed in Claim 1, in which the connecting unit comprises:
an annular case connected to the assist shaft to rotate therewith, the annular case having on its inner cylindrical wall a plurality of lock recesses;
a holder connected to the output shaft and placed in the annular case;
a lock pin movably received in the holder;
an electric actuating device installed in the holder to project the lock pin radially outward thereby to establish a locked engagement between the lock pin and one of the lock recesses.

11. A variable gear ratio steering device as claimed in Claim 10, in which the electric actuating device comprises:
an electromagnetic actuator that is arranged to pull down the lock pin from the lock recess when energized; and
a biasing spring that is arranged to bias the lock pin radially outward toward the lock recess.

12. A variable gear ratio steering device as claimed in Claim 11, in which the electromagnetic actuator comprises:
an axially movable plunger movably received in the holder, the plunger being connected to the lock pin to move therewith; and
an annular solenoid that functions to attract the plunger when energized.

13. A variable gear ratio steering device as claimed in Claim 1, in which the gear mechanism comprises a planetary gear unit.

14. A variable gear ratio steering device as claimed in Claim 1, in which the gear mechanism comprises a differential gear unit.
